(19) Europäisches Patentamt
European Patent Office
Office européen des brevets

(11) **EP 0 574 843 B1**

(12) **EUROPÄISCHE PATENTSCHRIFT**

(45) Veröffentlichungstag und Bekanntmachung des Hinweises auf die Patenterteilung:
**26.11.1997  Patentblatt 1997/48**

(51) Int Cl.6: **G06F 11/00**

(21) Anmeldenummer: **93109363.7**

(22) Anmeldetag: **11.06.1993**

(54) **Verfahren und Mittel zur Fehlerprüfung in Echtzeit**

Method and means of testing in real time

Procédé et moyen de test en temps réel

(84) Benannte Vertragsstaaten:
**DE FR GB SE**

(30) Priorität: **19.06.1992  DE 4220099**

(43) Veröffentlichungstag der Anmeldung:
**22.12.1993  Patentblatt 1993/51**

(73) Patentinhaber:
- **Alcatel SEL Aktiengesellschaft**
  **D-70435 Stuttgart (DE)**
  Benannte Vertragsstaaten:
  **DE**
- **ALCATEL N.V.**
  **NL-1077 XX Amsterdam (NL)**
  Benannte Vertragsstaaten:
  **FR GB SE**

(72) Erfinder: **Ashby, Michael**
**D-7000 Stuttgart 31 (DE)**

(74) Vertreter: **Knecht, Ulrich Karl, Dipl.-Ing. et al**
**Alcatel Alsthom**
**Intellectual Property Department,**
**Postfach 30 09 29**
**70449 Stuttgart (DE)**

(56) Entgegenhaltungen:
**US-A- 4 696 003**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und ein Mittel zur Fehlerprüfung von zu testenden Funktionen in Echtzeit.

Ein bisher bekanntes Verfahren ist die N-Versionen Programmierung, von nun an NVP (N-Versions Programming) genannt. Bei diesem Verfahren werden mehrere verschiedene (n) Versionen einer Funktion von verschiedenen Personen programmiert. Alle (n) Versionen werden einzeln eingesetzt, und die Ergebnisse werden miteinander verglichen. Bei Auftreten eines möglichen Fehlers, also unterschiedlicher Ergebnisse, werden die Programme auf die Fehler hin untersucht. Mit Hilfe dieses Verfahrens wird vermieden, daß gemeinsame Entwurfsfehler sich in unterschiedlichen Versionen wiederfinden (A. Avizienis, L. Chen; "N-Version Programming: A Fault-Tolerance Approach to Reliability of Software Operation"; Dig. of Pap. 8 th Int. Conf. on Fault-Tolerant Computing; Toulouse; pp 3-9; Jun 1978).

Ein weiteres bekanntes Verfahren ist der sogenannte "Sicherheitsrucksack" (DE 37 35 682). Bei diesem Verfahren wird, zusätzlich zu der zu testenden Funktion, eine weitere Funktion parallel dazu auf einem zusätzlichen Rechner ablaufen gelassen, und die beiden Ergebnisse werden einem Komparator und/oder einer logischen Entscheidungseinheit (Voter) zugeführt, worin die Ergebnisse der zu testenden Funktion und einer bereits getesteten Funktion verglichen werden. (DE 37 35 682 S.2 Z.66 - S.3 Z.6). Der Sicherheitsrucksack überwacht somit ständig die Sicherheit eines Systems, und bei Entdeckung eines gefährlichen Fehlers, also einem unterschiedlichen Ergebnis, wird eine Folgehandlung gesetzt.

Der Erfindung liegt die Aufgabe zugrunde, ein Verfahren und ein Mittel zu entwickeln, welches in Echtzeit eine Fehlerprüfung von n zu testenden Funktionen vornimmt, wobei n einer natürlichen Zahl entspricht.

Die Aufgabe wird erfindungsgemäß gelöst durch die Lehre des ersten Patentanspruchs.

Ein Vorteil der Erfindung liegt darin, daß zur Fehlerprüfung der zu testenden Funktionen keine zusätzliche Hardware, also zusätzliche Rechner, benötigt werden.

Ebenfalls sind die Kosten, sowie der zeitliche Aufwand bei der Erstellung der zu testenden Funktionen, der für die Fehlerprüfung mit Hilfe des NVP-Verfahrens erübrigt werden müßte, wesentlich geringer.

Ein weiterer wesentlicher Vorteil der Erfindung ist die Fehlerprüfung in Echtzeit. Ein System oder eine Anlage, welche sich der Funktionen bedienen, muß nicht angehalten werden, um eine Fehlerprüfung durchzuführen, was einen permanenten Service gewährleistet. Zusätzlich besteht bei dem hier beanspruchten Verfahren die Möglichkeit die Ausführung einer stark fehlerverursachenden, zu testenden Funktion sofort zu unterbinden, und die bereits getestete Funktion wieder vollständig, also zu 100 Prozent, einzusetzen.

Vorteilhafte Weiterentwicklung der Erfindung sind den Unteransprüchen 2 bis 4 zu entnehmen.

Nach Unteranspruch 4 wird das Mittel zur Fehlerprüfung bei Telekommunikationssystemen eingesetzt. Besonders bei diesem System ist es wichtig, daß nahezu keine Fehler verursacht werden, und daß das System nicht abgeschaltet werden muß, um somit einen unterbrechungsfreien Service zu gewährleisten.

Die Erfindung wird anhand der folgenden Figuren erläutert:

Fig 1:     Blockschaltbild des erfindungsgemäßen Mittels zur Fehlerprüfung in Echtzeit

Fig 2:     System oder Anlage eines Ausführungsbeispiels

Ein erfindungsgemäßes Mittel zur Fehlerprüfung in Echtzeit besteht aus einem System SA mit einem ersten getesteten Funktionsmodul A, und einem daran angeschlossenen dritten getesteten Funktionsmodul C, und einem ebenfalls daran angeschlossenen Teiler T. Der Teiler T ist mit einem zweiten getesteten Funktionsmodul B und mit einem neuen, zu testenden Funktionsmodul B' verbunden. Sowohl das getestete B, als auch das zu testende Funktionsmodul B', sind mit dem bereits getesteten Funktionsmodul C verbunden.

Von einer Testeinheit TE besteht eine Verbindung zu dem System SA. Ebenso besteht eine Verbindung von dem System SA zu einer Fehlerzähl- und Meldeeinheit FZME. Von der Fehlerzähl- und Meldeeinheit FZME besteht ebenfalls eine Verbindung zu der Testeinheit TE.

In dem System SA existieren zwei Wege zur Ausführung eines Programmablaufs. Bei dem ersten Weg wird zuerst die getestete Funktion des ersten Funktionsmoduls A, und daraufhin die getestete Funktion des dritten Funktionsmoduls C ausgeführt. Alternativ dazu kann, entsprechend der gewünschten Progammausführung, nach der Ausführung der getesteten Funktion des ersten Funktionsmoduls A, die getestete Funktion des zweiten Funktionsmoduls B, und darauf die getestete Funktion des dritten Funktionsmoduls C ausgeführt werden.

Zur Fehlerprüfung einer zu testenden Funktion eines Funktionsmoduls B', wird dieses parallel zu der getesteten Funktion des zweiten Funktionsmoduls B gebracht.

Der vor der getesteten und der zu testenden Funktion des Funktionsmoduls B und B' liegenden Teiler T, wird von der Testeinheit TE darauf voreingestellt, mit welchem prozentualen Anteil die getestete oder die zu testende Funktion des Funktionsmoduls B und B' während eines Ausführungszeitraumes an der Programmausführung beteiligt sind. Entsprechend diesem Anteil werden die Programmausführungen auf die entsprechenden Funktionen aufgeteilt.

Während des gesamten Auführungszeitraumes wird die absolute Fehlerhäufigkeit ermittelt. Diese wird von einer Fehlerzähl- und Meldeeinheit FZME ermittelt, welche die in dem System SA auftretenden Fehler zählt und aufaddiert. Der Betrag der absoluten Fehlerhäufigkeit wird an die Testeinheit TE weitergegeben.

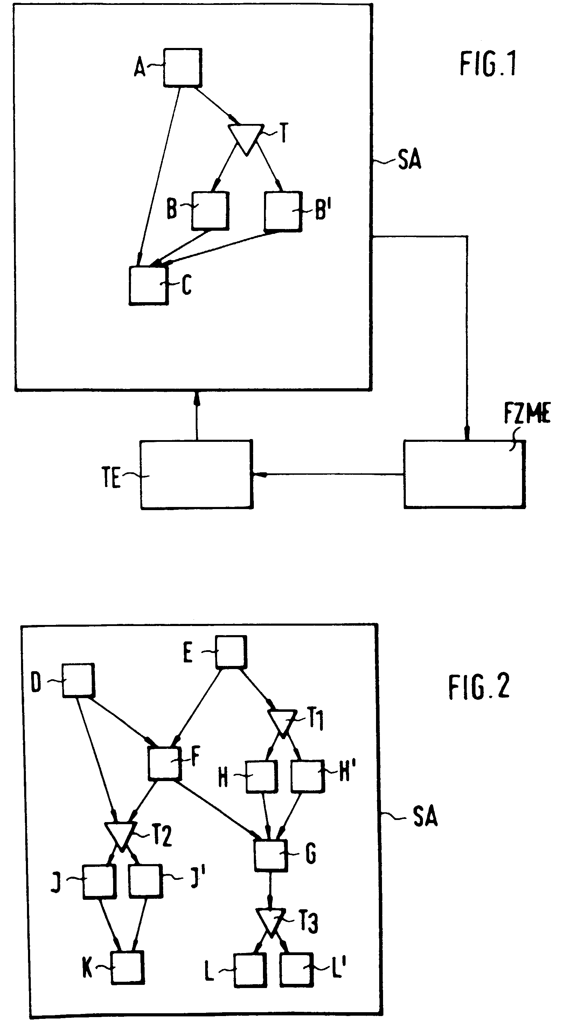

Im folgenden Teil wird das Verfahren nach Anspruch 1 anhand des Ausführungsbeispiels von Figur 2 erläutert.

Das in dem Ausführungsbeispiel beschriebene System besteht aus n = 3 zu testenden Funktionen der Funktionsmodule J', H', L'. Vor einer bereits getesteten Funktion des Funktionsmoduls H und der parallel dazu geschalteten zu testenden Funktion H' befindet sich ein erster Teiler $T_1$. Entsprechend befindet sich vor den Funktionen der Funktionsmodule J und J' ein zweiter Teiler $T_2$, und vor den Funktionen der Funktionsmodule L und L' ein dritter Teiler $T_3$.

Zusätzlich sind weitere getestete Funktionen der Funktionsmodule E, D, F, G und K beliebig mit den anderen parallelen Funktionen der Funktionsmodule H und H', J und J', L und L' verbunden.

Die drei Teiler $T_1$, $T_2$ und $T_3$ werden auf jeweils unterschiedliche prozentuale Anteile voreingestellt. Dies wird für n+1 = 4 Zeiträume vorgenommen. Es werden n+1 Zeiträume ausgewählt, weil zusätzlich die Ermittlung eines additiven Faktors K gewährleistet sein muß, welcher die absolute Fehlerhäufigkeit bei 100 prozentigem Einsatz der bereits getesteten Funktionen angibt. Die Teiler werden z.B. nach folgender Tabelle eingestellt:

Tab. 1:

| Prozentuale Anteile an Programmausführungen | | | |
|---|---|---|---|
| Zeitraum | $PT'_{1/\%}$ | $PT'_{2/\%}$ | $PT'_{3/\%}$ |
| 1 | 0 | 0 | 0 |
| 2 | 20 | 10 | 40 |
| 3 | 30 | 20 | 20 |
| 4 | 10 | 30 | 20 |

Tabelle 1 zeigt z.B., daß im Zeitraum 2 der Teiler $T_1$ auf den prozentualen Anteil $PT_1' = 20$ Prozent voreingestellt wird. Daraus ergibt sich, daß während einer Programmausführung 20 Prozent der Ausführungen von der zu testenden Funktion übernommen werden. Entsprechendes gilt für die anderen zu testenden Funktionen. Der prozentuale Anteil der bereits getesteten Funktion an Programmausführungen während eines Zeltraums beträgt $PT_1 = 100 - 20 = 80$ Prozent.

Die zu testenden Funktionen der Funktionsmodule H', J', und L' sind entsprechend der in der Tabelle aufgeführten prozentualen Anteile an der Durchführung beteiligt.

Während jedes Zeitraumes wird die absolute Fehlerhäufigkeit $E_1$ bis $E_4$ ermittelt. Die absoluten Fehlerhäufigkeiten $E_1$ bis $E_4$ sollen in diesem Ausführungsbeispiel folgendermaßen aussehen:

Tab. 2:

| Absolute Fehlerhäufigkeiten $E_1$ bis $E_4$ | |
|---|---|
| $E_1$ | 50 |
| $E_2$ | 53 |
| $E_3$ | 50 |
| $E_4$ | 49 |

Tabelle 2 zeigt z.B., daß die absolute Fehlerhäufigkeit $E_2$ im zweiten Zeitraum 53 beträgt, also daß insgesamt 53 Fehler gezählt wurden.

Mit diesen Angaben und Werten werden die n+1 = 4 linearen, mathematischen Gleichungen aufgestellt.
Die Grundgleichung lautet:

$$PT_1' \times EH' + PT_2' \times EJ' + PT_3' \times EL' + K = E$$

Hierbei stellt z.B. EH' die relative Fehlerhäufigkeit, verursacht von der zu testenden Funktion des Funktionsmoduls H', dar.

Für EJ' und EL' gilt das entsprechende. K entspricht der absoluten Fehlerhäufigkeit bei Einsatz der bereits getesteten Funktionen zu 100 Prozent, also der konstanten Fehlerhäufigkeit.

Somit ergeben sich die vier Gleichungen folgendermaßen:

$$\text{I} \qquad 0 \times EH' + 0 \times EJ' + 0 \times EL' + K = 50$$

$$\text{II} \qquad 20 \times EH' + 10 \times EJ' + 40 \times EL' + K = 53$$

$$\text{III} \qquad 30 \times EH' + 20 \times EJ' + 20 \times EL' + K = 50$$

$$\text{IV} \qquad 10 \times EH' + 30 \times EJ' + 20 \times EL' + K = 49$$

Die Lösungen der Gleichungen ergeben folgende Werte:
Aus I ergibt sich:

$$K = 50$$

Dies entspricht der absoluten Fehlerhäufigkeit bei 100 prozentigem Einsatz der bereits getesteten Funktionen.
Aus II - 2 x IV ergibt sich:

$$0 \times EH' - 50 \times EJ' + 0 \times EL' - 50 = 53\text{-}98$$

$$- 50 \times EJ' = 5$$

$$\underline{EJ' = -0{,}1}$$

Aus dem Wert $EJ' = -0{,}1$ läßt sich erkennen, daß bei Verwendung der Funktion des Funktionsmoduls J' weniger Fehler verursacht werden, als bei Verwendung der Funktion J. Die Fehlerhäufigkeit sinkt um genau 10 Prozent.
Aus II - 2 x III ergibt sich:

$$- 40 \times EH' - 30 \times (-0{,}1) + 0 \times EL' - 50 = 53\text{-}100$$

$$- 40 \times EH' + 3 - 50 = -47$$

$$\underline{EH' = 0}$$

Der Wert $EH' = 0$ zeigt, daß die Verwendung der Funktion des Funktionsmoduls H' zwar keine zusätzlichen Fehler verursacht, aber die Fehlerhäufigkeit auch nicht erniedrigt wird. Somit wird durch die Verwendung der Funktion keine Verbesserung erzielt.
Zuletzt ergibt sich aus der Gleichung IV

$$0 - 3 + 20 \times EL' + 50 = 49$$

$$20 \times EL' = 2$$

$$\underline{EL' = +0{,}1}$$

Der Wert $EL' = +0{,}1$ zeigt, daß die Fehlerhäufigkeit durch die Verwendung der Funktion des Funktionsmoduls L' erhöht wird. Es tritt eine Erhöhung der Fehlerhäufigkeit um 10 Prozent ein.

Mit den so errechneten Werten ist eindeutig ermittelt worden, welche Funktion H, J, L, im Hinblick auf die Erniedrigung des Fehlers, durch eine Funktion H', J', L' ersetzt werden sollte, und welche nicht.

Diese Fehlerprüfung findet in Echtzeit statt, da ein Funktionieren des Systems durch das anteilmäßige Zuschalten der zu testenden Funktionen weitestgehend gewährleistet ist. Denn durch den anfänglich hauptsächlichen Einsatz der bereits getesteten Funktionen wird eine grobe Störung des Systems durch eine fehlerbehaftete, zu testende Funktion weitestgehend vermieden, oder reduziert.

**Patentansprüche**

1. Verfahren zur Fehlerprüfung in Echtzeit von n zu testenden Funktionen - mit n gleich einer natürlichen Zahl - eines, sich aus einer Mehrzahl von Funktionsmodulen zusammensetzenden Programmes zur Ausführung von Funktionen, in dem die Funktionsmodule nacheinander und/oder parallel zueinander angeordnet sind, bei dem mindestens ein bereits getestetes Funktionsmodul und ein zugeordnetes zu testendes Funktionsmodul parallel angeordnet sind und abwechselnd ausgeführt werden, bei dem das zu testende Funktionsmodul mit dem prozentualen Anteil PT' = X, und das bereits getestete Funktionsmodul mit dem prozentualen Anteil PT = 100 - X an ablaufenden Programmausführungen beteiligt ist - mit X, PT und PT' gleich einer ganzen Zahl zwischen 0 und 100 -, und mittels eines Teilers voreingestellt werden und bei dem die eine Programmausführung für n+1 gleich lange Zeiträume, innerhalb deren dieselbe Programmausführung mit jeweils unterschiedlichen prozentualen Anteilen ausgeführt wird, und innerhalb deren die absolute Fehlerhäufigkeit des Gesamtsystems während jedes dieser n+1 Zeiträume ermittelt wird, und bei dem sich daraus ein Satz von n+1 linearen, mathematischen Gleichungen ergibt, in denen die Summe der mit den jeweiligen prozentualen Anteilen multiplizierten Fehlerhäufigkeiten der zu testenden Funktionsmodulen gleich der gemessenen absoluten Fehlerhäufigkeit des Gesamtsystems gesetzt wird, woraus die konstante Fehlerhäufigkeit bei 100-prozentigem Einsatz von bereits getesteten Funktionsmodulen, und die relative Fehlerhäufigkeit der n zu testenden Funktionsmodule berechnet wird.

2. Verfahren zur Fehlerprüfung nach Anspruch 1, wobei zur Berechnung der relativen Fehlerhäufigkeit der n zu testenden Funktionsmodule folgende Gleichung eingesetzt wird:

$$PT_1' \text{x } E1' + PT_2' \text{x } E2' + \dots + PT_n' \text{x } En' + K = E$$

und $PT_n' = X_n$ für n = 1,2, ...

mit $PT_1', PT_2', \dots PT_n' =$       prozentualer Anteil der n zu testenden Funktionsmodule an der Ausführung,

mit $E1', E2', \dots En' =$       relative, zu berechnende Fehlerhäufigkeit,

mit K =       konstante, absolute Fehlerhäufigkeit bei 100 prozentigem Einsatz von bereits getesteten Funktionsmodulen,

mit E =       absolute Fehlerhäufigkeit.

3. Mittel zur Durchführung des Verfahrens nach Anspruch 1 oder 2, bestehend aus einer Testeinheit (TE) einer Fehlerzähl- und Meldeeinheit (FZME) und einem System (SA), welches aus mindestens einem ersten getesteten Funktionsmodul (A), welches mit einem Teiler (T) sowie mit mindestens einem dritten, ebenfalls getesteten Funktionsmodul (C) verbunden ist, besteht, und wobei der Teiler (T) mit einem mindestens zweiten getesteten Funktionsmodul (B) und mit mindestens einem zu testenden Funktionsmodul (B') verbunden ist, welche wiederum jeweils mit dem dritten, getesteten Funktionsmodul (C) verbunden sind, wobei die Fehlerzähl- und Meldeeinheit (FZME) mit der Testeinheit (TE) verbunden ist, und die Testeinheit (TE) mit dem System (SA) verbunden ist, welches mit der Fehlerzähl- und Meldeeinheit (FZME) verbunden ist, wobei die Testeinheit (TE) den Teiler (T) auf die unterschiedlichen prozentualen Anteile PT' = X und PT = 100 - X der Funktion an den Programmausführungen einstellt, wobei von der Fehlerzähl- und Meldeeinheit (FZME) die absolute Fehlerhäufigkeit in dem System (SA) gezählt wird, und wobei in der Testeinheit (TE) die Berechnung der relativen Fehlerhäufigkeiten erfolgt.

4. Verwendung des Verfahrens nach Anspruch 1 oder 2 zur Fehlerprüfung in Echtzeit für ein Telekommunikationssystem.

**Claims**

1. Process for real-time error detection of *n* to-be-tested functions - where *n* is a natural number - of a functionexecuting program composed of a number of function modules, in which process the function modules are arranged in series and/or in parallel with each other, and in which process at least one already tested function module and one associated to-be-tested function module are arranged in parallel with each other and executed alternately, and in which process the to-be-tested function module is involved in a percentage PT' = X of program executions, and the already tested function module is involved in a percentage PT = 100- X of program executions - where $X$, $PT$ and $PT'$ are whole numbers between 0 and 100 - and which are preset by means a divider, and in which process the one program execution is effected for $n + 1$ time intervals of equal length, during which the same program execution is effected with different percentages in each case, and during which the absolute error rate of the entire system is determined during each of these $n + 1$ time intervals, and in which process a set of $n + 1$ linear mathematical equations is produced, in which the sum of the error rates multiplied by the respective percentages of the to-be-tested function modules is made the same as the measured absolute error rate of the entire system, from which the constant error rate for 100 percent use of already tested function modules, and the relative error rate of n to-be-tested function modules, is calculated.

2. Process for error detection according to Claim 1, in which the following equation is used to calculate the relative error rate of n to-be-tested function modules:

$$PT_1' \times E1' + PT_2' \times E2' + ... + PT_n' \times En' + K = E$$

and $PT_n' = X_n$ for n = 1, 2, ... where

$PT_1'$, $PT_2'$, ... $PT_n'$ =      the percentage of n to-be-tested function modules being executed

$E1'$, $E2'$, ... $En'$ =      the relative, to-be-calculated error rate,

$K$ =      the constant, absolute error rate for 100 percent use of already tested function modules,

$E$ =      the absolute error rate.

3. Means for implementing the process according to Claim 1 or 2, consisting of a test unit (TE), an error counting and indicating unit (FZME) and a system (SA), which comprises at least one first tested function module (A) which is connected to a divider (T) as well as to at least a third, likewise tested function module (C) and where the divider (T) is connected to at least a second tested function module (B) and to at least one to-be-tested function module (B'), which in turn is connected at any one time to the third, tested function module (C), where the error counting and indicating unit (FZME) is connected to the test unit (TE), and the test unit (TE) is connected to the system (SA), which is connected to the error counting and indicating unit (FZME), where the test unit (TE) sets the divider (T) to the different percentages PT' = X and PT = 100 - X of the function at the program executions, where the absolute error rate in the system (SA) is counted by the error counting and indicating unit (FZME), and where the calculation of the relative error rates is effected in the test unit (TE).

4. Use of the process according to Claim 1 or 2 for real-time error testing for a telecommunications system.

**Revendications**

1. Procédé pour le contrôle des erreurs en temps réel de n fonctions à tester - avec n égale un nombre naturel - d'un programme comprenant un grand nombre de modules de fonction pour l'exécution de fonctions, dans lequel les modules de fonction sont disposés de façon successive et/ou en en parallèle, avec lequel au moins un module de fonction déjà testé et un module de fonction attribué à tester sont disposés en parallèle et sont exécutés alternativement, avec lequel le module de fonction à tester est impliqué avec la part en pourcentage PT' = X, et le module de fonction déjà testé avec la part en pourcentage PT=100-X dans des exécutions de programme en cours - avec X, PT et PT' égaux à un nombre entier compris entre 0 et 100 -, et sont préréglés au moyen d'un diviseur et avec lequel on a là une exécution de programme pour n+1 périodes de même longueur, dans le cadre desquelles la même exécution de programme est exécutée avec des parts en pourcentages respectivement différentes, et dans le cadre desquelles la fréquence d'erreurs absolue du système global est calculée pendant chacune de ces n+1 périodes, et avec lequel on déduit une série de n+1 équations mathématiques linéaires, dans lesquelles le total des fréquences d'erreurs des modules de fonction à tester, multipliées par les parts en pourcentages respectifs est supposé égal à la fréquence d'erreurs absolue mesurée du système global, à partir de quoi on calcule la fréquence d'erreurs constante pour une utilisation à 100% de modules de fonction déjà testés, et la fréquence d'erreurs relative des n modules de fonction à tester.

**2.** Procédé pour le contrôle des erreurs selon la revendication 1, en utilisant l'équation suivante pour calculer la fréquence d'erreurs relative des n modules de fonction à tester :

$$PT_1' \times E1' + PT_2' \times E2' + ... + PT_n' \times En' + K = E$$

et $PT_n' = X_n$ pour n = 1, 2,...
avec

      $PT_1'$, $PT_2'$, ... $PT_n'$ = part en pourcentage des n modules de fonction à tester de l'exécution,
      avec E1', E2', ... En' = fréquence d'erreurs relative à calculer,
      avec K = fréquence d'erreurs absolue constante avec une utilisation à 100% de modules de fonction déjà testés,
      avec E = fréquence d'erreurs relative.

**3.** Moyen pour l'application du procédé selon la revendication 1 ou 2, comprenant une unité de test (TE), une unité de comptage d'erreurs et de signalisation (FZME) et un système (SA) qui comprend au moins un premier module de fonction (A) testé, lequel est relié à un diviseur (T) et à au moins un troisième module de fonction (C) également testé, le diviseur (T) étant relié à au moins un deuxième module de fonction (B) testé et à au moins un module de fonction (B') à tester, lesquels sont reliés à leur tour au troisième module de fonction (C) testé, l'unité de comptage d'erreurs et de signalisation (FZME) étant reliée à l'unité de test (TE), et l'unité de test (TE) étant reliée au système (SA), qui est relié à l'unité de comptage d'erreurs et de signalisation (FZME), l'unité de test (TE) réglant le diviseur (T) sur les différentes parts en pourcentage PT'=X et PT=100-X de la fonction des exécutions de programme, la fréquence d'erreurs absolue étant comptée dans le système (SA) par l'unité de comptage d'erreurs et de signalisation (FZME), et le calcul de la fréquence d'erreurs relative s'effectuant dans l'unité de test (TE).

**4.** Utilisation du procédé selon la revendication 1 ou 2 pour le contrôle des erreurs en temps réel pour un système de télécommunication.

FIG.1

FIG.2